# EUROPÄISCHE PATENTSCHRIFT

(11) **EP 0 470 552 B1**
(45) Veröffentlichungstag und Bekanntmachung des Hinweises auf die Patenterteilung: **14.07.1993**
(21) Anmeldenummer: 91113137.3
(22) Anmeldetag: 05.08.1991
(51) Int. Cl.: A61C 5/12

(54) **Matrize für die Dentalmedizin und eine Vorrichtung zur Herstellung von Matrizenbändern**
Dental matrix band and a device for its fabrication
Matrice dentaire et un dispositif pour sa fabrication

(30) Priorität: 06.08.1990 CH 2562/90; 28.12.1990 DE 9017522 U
(43) Veröffentlichungstag der Anmeldung: 12.02.1992
(73) Patentinhaber: SUHONEN, Jouko, 8302 Kloten (CH); Reimer, Hans, Dr.-Ing., D-22305 Hamburg (DE)
(72) Erfinder: Suhonen, Jouko, Dr. med.dent., CH-8426 Lufingen (CH)
(74) Vertreter: Richter, Werdermann & Gerbaulet

(56) Entgegenhaltungen:
- EP-A- 0 241 197
- US-A- 3 842 505
- US-A- 4 523 909

## Beschreibung

Die Erfindung betrifft eine Matrize für die Dentalmedizin, die als Verschalung beim Einbringen von Füllungen in Zahnkavitäten dient und die aus einem bandförmigen Zuschnitt aus einem zweischichtigen Material besteht, wobei die eine Schicht lichtundurchlässig und die andere Schicht lichtdurchlässig ist, und eine Vorrichtung zur Herstellung von Matrizenbändern.

Die Aufgaben der bekannten, verschieden geformten Matrizen in der konservierenden Zahnmedizin sind folgende:Die Matrizen haben die Aufgabe, durch Zahnfäulnis (Karies),durch Abrasion und Kavitätenpräparation (Elimination von Karies) verlorengegangene Wände während des Einbringens der Füllung in der Art einer Verschalung im Bauwesen zu ergänzen. Die Matrize hat als "Mutterform" die verlorengegangene Wand des Zahnes - meist bei Kavitäten der Klasse II - wieder herzustellen, das exakte Einbringen des Füllmaterials zu ermöglichen und den Randschluß zervikal, d.h. im Bereich des Zahnhalses, zu sichern. Die spätere Füllung ist dann gewissermaßen die "Patrize".

In der Zahnmedizin wird als Füllmaterial zusehends mehr Kunststoff verwendet. Dieser muß nach seinem Einbringen am Zahn gehärtet werden, ein Vorgang, welcher gewisse Schwierigkeiten bietet, da die Härtung in den unteren zahnnahen Bereichen zuerst erfolgen muß, ansonsten beim Aushärten der oben liegenden, freien Kunststoffteilen infolge Schrumpfung des gehärteten Kunststoffmaterials, insbesondere in inneren berührungsbereichen von Zahn und Kunststoff, in der Folge entsprechende Risse bzw. Hohlräume entstehen.

Das grundsätzliche Problem der Kunststoffhärtung, welche durch Lichtenergie erfolgt, und deren Zuführung zu den unten liegenden Bereichen der Füllung ist mittels der bekannten sogenannten Leuchtkeile, welche das eingestrahlte Licht durch Umlenkung an die gewünschten, meist verborgenen Stellen bringen kann, gelöst.

Was dagegen noch ein Problem darstellt, sind die sogenannten Matrizen, welche nicht nur in Form einer Schalung das möglichst formgerechte Füllen der Kavitäten ermöglichen müssen, sondern auch in am Zahn montiertem Zustand die Härtung des eingebrachten Kunststoffes.

Durch die US-A-4 523 909 ist eine Matrize für die Dentalmedizin gemäß dem ersten Teil von Anspruch 1 bekannt, die als Verschalung beim Einbringen von Füllungen in Zahnkavitäten dient. Diese Matrize besteht aus einem bandförmigen Zuschnitt aus einem metallischen Material; sie ist somit lichtundurchlässig. Dieser metallische Zuschnitt ist auf der der Füllung zugekehrten Seite mit einem Film oder einer Folie aus einem Kunststoff beschichtet, der auch transparent oder opak sein kann, wodurch jedoch eine Durchlässigkeit von Licht durch die Matrize nicht erreicht wird. Die Matrize selbst weist keinen lichtdurchlässigen Bereich oder ein lichtdurchlässiges Fenster auf. Dadurch, daß die Matrize aus lichtundurchlässigem Material besteht, ist keine Möglichkeit gegeben, als Füllmaterial durch Licht aushärtbaren Kunststoff zu verwenden.

Es ist daher Aufgabe der Erfindung, eine Matrize für die Dentalmedizin der eingangs genannten Art zu schaffen, die in Form einer Schalung ein formgerechtes Füllen der Kavitäten und in am Zahn montiertem Zustand eine einwandfreie Härtung des eingebrachten Kunststoffes durch Lichtenergie ermöglicht.

Diese Aufgabe wird durch die im Anspruch 1 gekennzeichneten Merkmale gelöst.

Eine derart erfindungsgemäß ausgebildete Fenstermatrize erlaubt die Optimierung der marginalen Adaptation approximaler Randbezirke von lichtgehärteten MO-, OD- und MOD-Kompositrestorationen. Diese sog. "Umhärtungstechnik" durch das Fenster ermöglicht das Steuern der Polymerisationsschrumpfung: Mittels der seitlich reflektierenden Leuchtkeile lassen sich im bezüglich Sekundärkaries (Rückfallkaries), Gingivitis (Zahnfleischentzündung) und Parodontitis (Entzündung des Zahnhalteapparates) kritischen gingivo-approximalen Bereich die Randverhältnisse Dank der Umkehrung der Schrumpfungsvektoren optimieren.

Diese Fenstermatrizentechnik eliminiert nicht nur die negativen Eigenschaften der für Komposits typischen polymerisationsbedingten Volumenschrumpfung, sondern verhindert auch die feinen Überschüsse durch reißfestes Spannen des Matrizenbandes, das weiterhin, auch ohne zu reißen, sehr fest gespannt werden kann.

Die Fenstermatrize ermöglicht weiterhin überschußfreies Festzementieren von verschiedensten Adhäsivrestorationen, wie : Brillinat-, Ceram-, Cerec-, Dicor-, Eos-, Isosit-, Mirage-, Tuceram-Inlays.

Vorteilhafte Ausgestaltungen der Erfindung sind in den Unteransprüchen gekennzeichnet, wobei besonders vorteilhaft die Vorrichtung zur Herstellung von mehrschichtigen Matrizenbändern nach Anspruch 15 ist.

Ausführungsbeispiele der Erfindung werden nachstehend anhand der Zeichnung näher erläutert. Es zeigen
Fig. 1 eine Ansicht von oben auf eine Matrize, wie diese für doppelapproximale Füllungen und relativ großen gegenseitigen Zahnabständen verwendet wird,
Fig. 2 eine Ansicht von oben auf drei Zähne mit großem Abstand,
Fig. 3 eine Seitenansicht der Zähne gemäß Fig. 2,
Fig. 4 eine Matrize für den Zweck gemäß Fig.1 für aneinanderliegende Zähne,
Fig. 5 eine Ansicht von oben auf aneinanderliegende Zähne,
Fig. 6 eine Seitenansicht der Zähne gemäß Fig.5,
Fig. 7 eine Seitenansicht nahe beieinanderliegender Zähne mit eingebrachter Matrize und einem Leuchtkeil,
Fig. 8 eine Ansicht von oben auf ein Zähnepaar gemäß Fig. 7 mit einem eingeschobenen Leuchtkeil und einem Matrizenspanner,
Fig. 9, 9a bis 9e und Fig. 10, 10a bis 10e eine Anzahl unterschiedlicher Matrizenformen für den Gebrauch mit individuellen Zahnstellungen und Kunststoffüllungen,
Fig. 11 eine Matrize mit einem Fenster im Cervico- oder Zahnhalsbereich,
Fig. 12,12a bis 12k eine weitere Anzahl von Matrizenformen in unterschiedlichen Ausführungsformen für molare Zähne,
Fig. 13 bis 15 ein- und zweibäuchige Grundformen von Metallmatrizenbändern,
Fig. 16 ein aus einem glasklaren Kunststoff bestehendes band in einem abgewickelten Zustand,
Fig. 17 eine schaubildliche Darstellung eines mit einer Füllung versehenen Zahnes mit den zeitlich sich folgenden Härtungsbereichen,
Fig. 18 einen vergrößerten senkrechten Schnitt einer aus einer metallbeschichteten Folie hergestellten Matrize und
Fig. 19 eine schematische Darstellung einer Vorrichtung zur Herstellung von Zahnmatrizen.

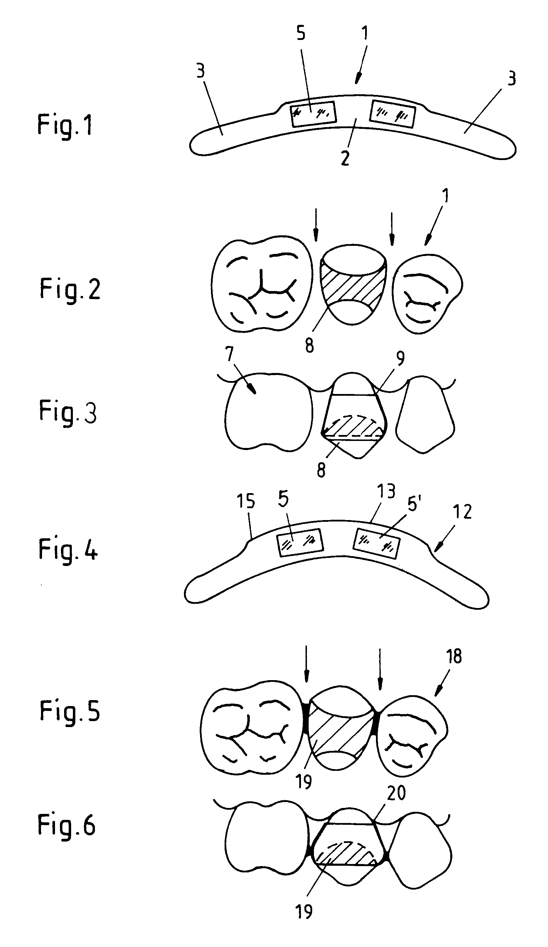

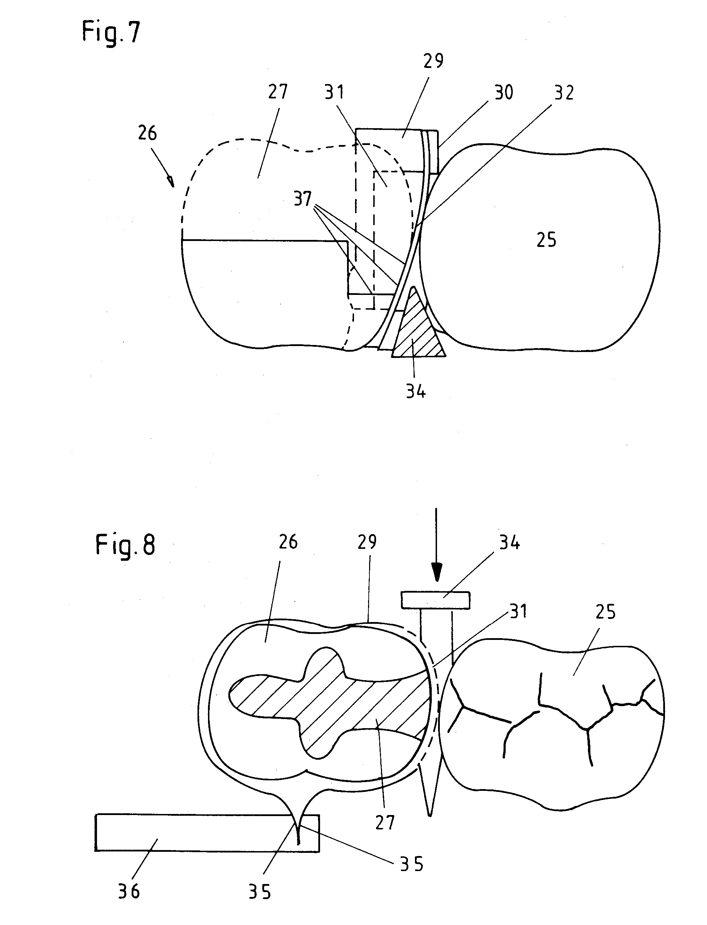

Die in Fig. 1 dargestellte Matrize 1 weist in ihrem mittleren Bereich ein Positionierungsteil 2 auf, an das sich beidseitig zwei Endbereiche 3 anschließen, die gegenüber dem Positionierungsteil 2 derart abgesetzt sind, daß das Positionierungsteil 2 mit einem Abschnitt aus der von den oberen Rändern der beiden Endbereiche 3 gebildeten Ebene herausragt. Die Matrize 1 ist mit zwei ausgestanzten Fenstern 5 versehen; sie ist bevorzugterweise zweischichtig ausgebildet, wobei die eine tragende Schicht aus einem dünnen Stahlband von beispielsweise 0,05 mm Dicke besteht, auf dem ein ebenso dünner, durchsichtiger Kunststoffstreifen, bevorzugterweise aus Celluloseacetat, befestigt ist. Die beiden Schichten können miteinander verklebt, heiß oder warm versiegelt oder sonstwie verbunden sein; sie bilden beim Gebrauch eine Einheit, wobei der Kunststoffstreifen gegen die Zahnfüllung und das Stahlband von dieser Füllung abliegt, wie dies beispielsweise die Fig. 7 zeigt.

Die Fig. 2 und 3 zeigen in Aufsicht und Seitenansicht eine Zahngruppe 7, bestehend aus drei Zähnen, von welchen der mittlere Zahn eine Kavität 8 aufweist, die mit einem härtenden Kunststoff unter Einhaltung der ursprünglichen Zahnform zu füllen ist. Im Bereich des Zahnhalses 9 verkleinert sich, wie aus Fig. 3 ersichtlich ist, der Umfang des Zahnes. Aus diesem Grunde muß die Matrize beim Umfassen des zu behandelnden Zahnes und dem Zusammenziehen der Matrize an ihren beiden Enden 3 eine konische Form ergeben, um die im Kontaktpunkt breitere Zahnform eng zu umfassen.

Aus diesem Grunde ist die Wandkante zum Cervikalbereich kürzer als die Kante zur Randleiste der Füllung, wie dies Fig. 3 erkennen läßt. Die Matrize 1 bildet die anatomische Form des Zahnes im Cervikalbereich, d.h. im Bereich des Zahnhalses, möglichst genau nach. Damit verhindert sie die Überfüllung in diesem Bereich mit Füllmaterial und schont das marginale Paradont. Um den beim Einbringen von Füllmaterial auftretenden seitlichen Kräften standzuhalten, ist die Matrize 1 mit dem Stahlband ausgerüstet.

Die Fig. 4 bis 6 zeigen analoge Darstellungen wie die Fig. 1 bis 3, jedoch für nahe beieinanderliegende Zähne und kleindurchmessrigen Zahnhals des zu behandelnden Zahnes. bei dieser Ausführung sollte das Matrizenband ebenfalls den Approximalkasten cervikal nur knapp überragen, um dort verkeilt zu werden. Diese Verkeilung ist insbesondere in Fig. 7 in einem vergrößerten Maßstab dargestellt.

Die Fig. 4 zeigt eine Matrize 12 mit einer Krümmung 13, die größer ist als diejenige der Matrize 1 gemäß Fig. 1, sowie mit zwei Fenstern 5,5' und einer betont konischen Absetzung 15, welche dem geringeren Umfang des Zahnhalses entspricht.

Diese Matrize 12 ist zur Anwendung auf eine Zahngruppe 18 vorgesehen, bei welcher der mittlere Zahn eine Kavität 19 besitzt und einen im Umfang relativ kleinen Zahnhals 20. Dieser Form trägt die Matrize gemäß Fig.4 durch die relativ große konische Absetzung 15 Rechnung.

In Fig. 7 sind zwei Zähne in einer Seitenansicht wiedergegeben, nämlich ein gesunder Zahn 25 und ein eine Kavität aufweisender Zahn 26 mit einer Kunststoffüllung 27, die strichpunktiert angedeutet ist. Eine Matrize 29 der beschriebenen Art weist ein außenliegendes Stahlband 30 mit einem oder mehreren Fenstern 31 und ein am behandelten Zahn 26 anliegendes Kunststoffband 32 auf. Zwischen die Zahnhälse der beiden Zähne 25 und 26 ist ein Leuchtkeil 34 eingeschoben.

Fig. 8 zeigt die Aufsicht auf die Zähne gemäß der Anordnung nach Fig. 7, wobei die beiden Matrizenenden 35 der um den behandelnden Zahn 26 gelegten Matrize mittels eines Matrizenspanners 36 durch die Erfassung der Matrizenenden 35 um den Zahn gespannt wird und damit die Füllung die in den Fig. 7 und 8 erwünschte Form erhält. Die Beleuchtung des Leuchtkeiles 34 durch eine äußere Lichtquelle erlaubt bei dieser Lage der Teile, den kritischen Bereich des Zusammentreffens von Kunststoff und Zahnmaterial als erstes im primären Härtungsbereich 37 auszuhärten und damit die gefürchteten Schrumpfzwischenräume zwischen Kunststoff und Zahnmaterial zu verhüten. Die oben liegenden Bereiche der Kunststoffmasse werden anschließend ausgehärtet, derart, daß sich die Schrumpfung der Härtung nur an den freien Flächen des Kunststoffes äußert und im Grunde genommen die ganze Kunststoffmasse rißfrei und ohne Bildung von Zwischenräumen mit der Zahnmasse ausgehärtet werden kann.

Die K1 II-Matrize hat je nach Anwendungsindikation ein (für einfachapproximale Füllung) oder zwei Fenster (für doppelapproximale Füllungen) aus Zelluloseacetat im Approximalbereich. Die Fenster ermöglichen eine einwandfreie Lichthärtung im Approximalbereich. Die Lichteinwirkung wird nicht eingeschränkt.

Das K1 II-Matrizenband wird mit Hilfe von Matrizenspannern, wie das Toffelmire-System, UHM-System oder Nyström I und II-System in situ gehalten.

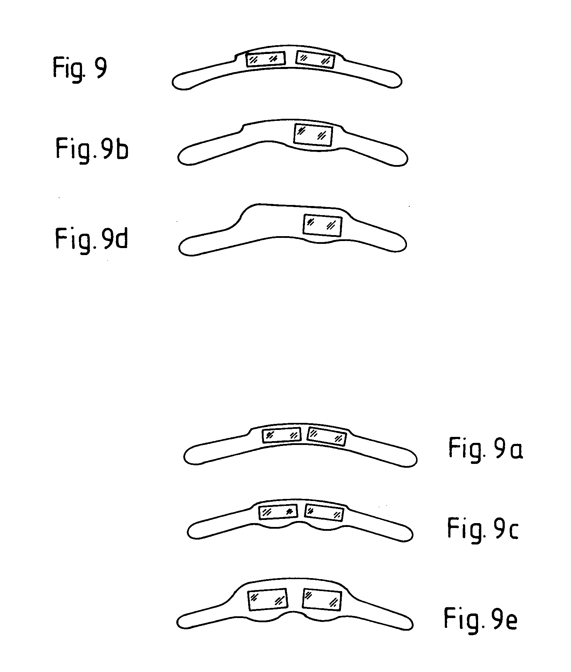

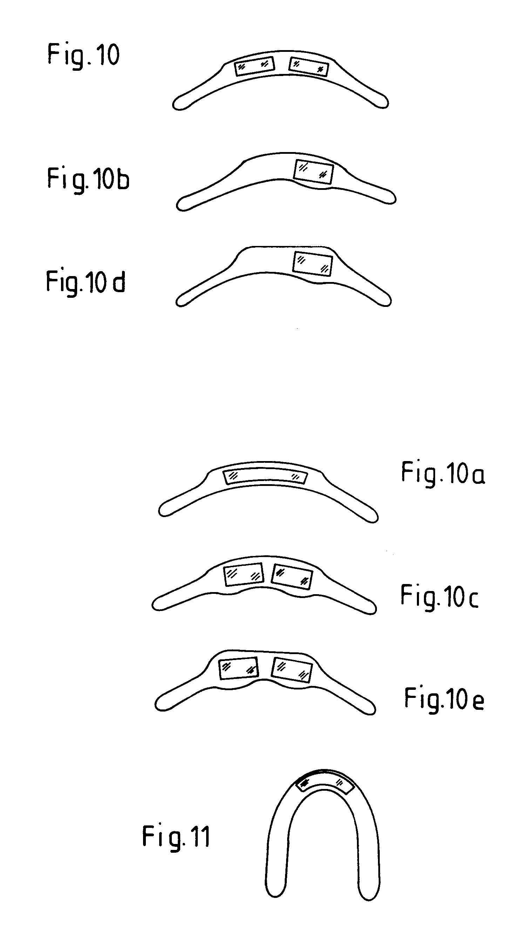

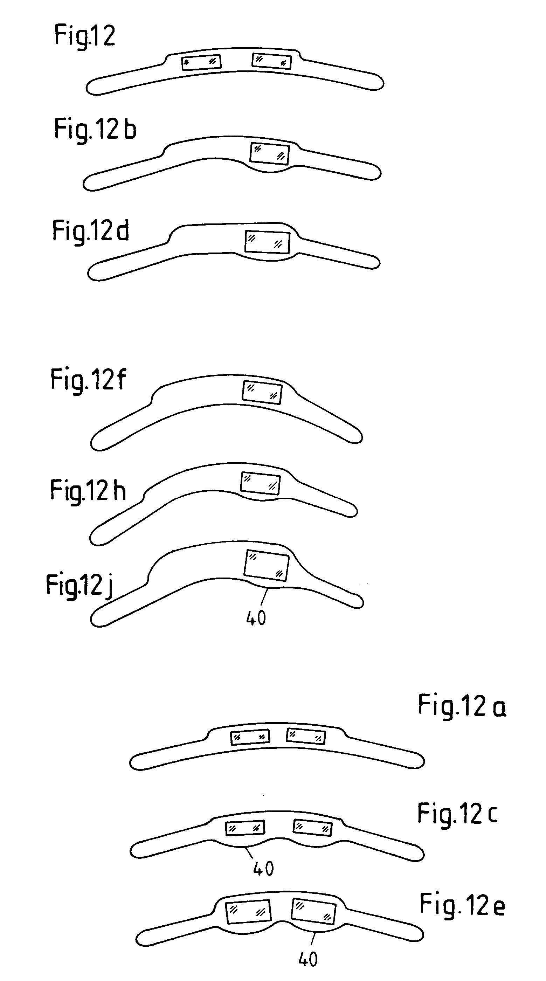

Die Fig. 9,9a bis 9e und 10,10a bis 10e zeigen prämolare Matrizenbänder, während die Fig. 12,12a bis 12k molare Matrizenbänder zeigen. Die Ausbauchungen 40 sind klar ersichtlich.

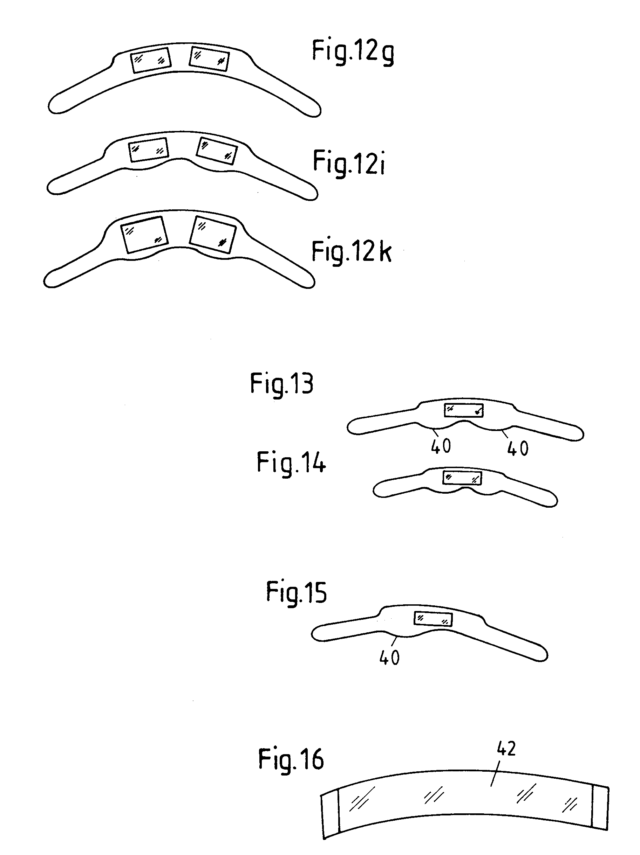

Die Fig. 13 und 14 zeigen die Grundform von zweibäuchigen Matrizenbändern, während Fig. 15 eine einbäuchige Ausführung offenbart. Dabei sind die Fenstergrößen von Molarbändern ca. 5 x 10mm, und die Prämolarbänder weisen eine Fenstergröße von ca. 4 x 8mm auf.

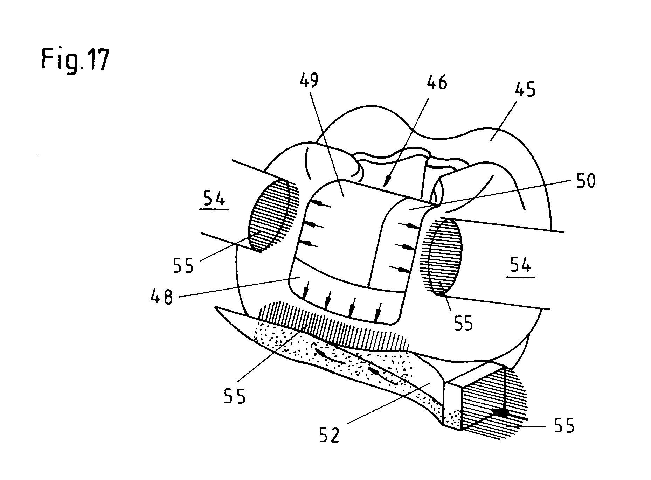

Fig. 16 zeigt einen Celluloseacetatstreifen 42, wie dieser vor dem Ausstanzen der Matrize mit dem Stahlband nach der Fensterausstanzung aufgebracht wird.

Fig. 17 zeigt einen Zahn 45 in perspektivischer Darstellung mit einer Füllung 46, welche schematisch stark umrandet ist und mit Zonen 48,49 und 50 gekennzeichnet ist. Ein Leuchtkeil 52 wird von einer Lichtquelle 54 mit Lichtstrahlen 55 beaufschlagt, die aufgrund der Keilkonstruktion umgelenkt werden und die unterste Zone 48 bei Lichteinfall härten.

Anschließend werden die beiden Zonen 49 und 50, wie schematisch ersichtlich, ausgehärtet, wobei die in den verschiedenen Figuren dargestellten Matrizen die Kunststoffüllung 46 entsprechend umfassen, so daß diese formgerecht der Härtung unterzogen werden kann.

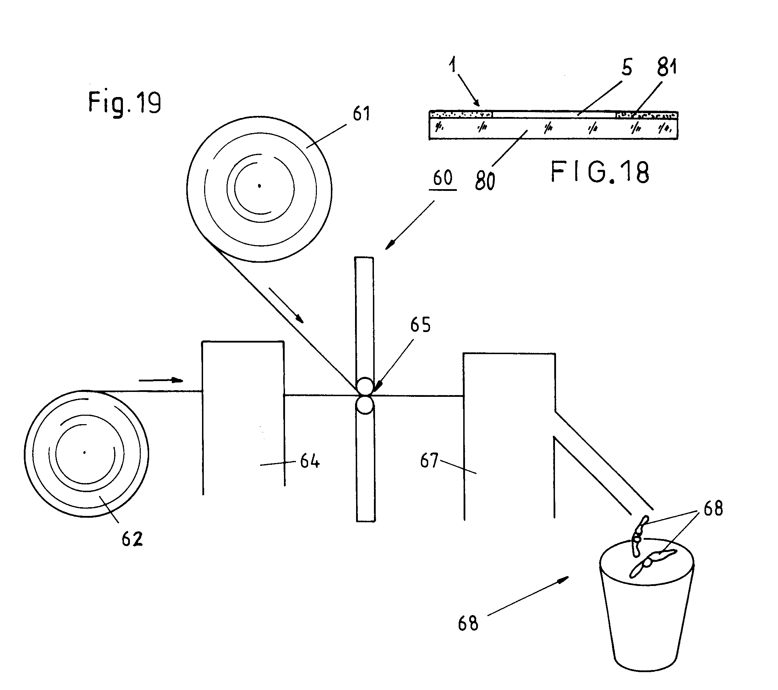

In Fig. 19 ist zur Herstellung von Matrizenbändern eine Vorrichtung 60 schematisch dargestellt, die eine Kunststoffbanderole 61 und eine Metallbandrolle 62 umfaßt.Das Metallband der Stahlbandrolle 62 wird durch eine Stanzeinrichtung 64 geführt, vermittels der die entsprechende Anzahl Fenster ausgestanzt wird. Das von der Rolle abgenommene Kunststoffband und das gestanzte Metallband werden in der Verbindungsstation 65 miteinander durch Wärme, Klebstoff od. dgl. kaschiert, so daß sie eine unzertrennbare Einheit bilden. Die beiden vereinigten Bänder gelangen in eine Matrizenstanze 67,vermittels der die Matrizen 68 hergestellt und in gebrauchsfertiger Form ausgeworfen werden. Das Metallband gibt den Fenstermatrizen die benötigte Steifheit, die wiederum vorteilhaft beim Legen des Bandes und bei der Formgebung der Füllung ist.

Die Matrize 1 besteht nach der einen Ausführungsform aus einem dünnen bandförmigen Zuschnitt aus Stahl oder einem anderen geeigneten elastischen Werkstoff, wobei auch mit der Zahnfüllung nicht reagierende Kunststoffe verwendet werden können. In diesem bandförmigen, metallischen Zuschnitt sind ein oder mehrere fensterartige Durchbrechungen 5 ausgebildet, die mittels eines streifenförmigen Zuschnittes aus einem lichtdurchlässigen, insbesondere glasklaren Kunststoff abgedeckt sind, wobei dieser Kunststoffstreifen eine der Form und den Abmessungen des Stahlbandes der Matrize 1 entsprechende Ausgestaltung aufweist, so daß der Kunststoffstreifen deckungsgleich mit dem Stahlband ist. Es besteht jedoch auch die Möglichkeit, nur im Bereich der Fenster 5 in dem Stahlband Zuschnitte aus lichtdurchlässigem Kunststoff anzuordnen, wobei diese Kunststoffzuschnitte so bemessen sind, daß die Fenster 5 abgedeckt sind und daß sie mit einem Abschnitt an der Wandfläche des Stahlbandes anliegen, um die Kunststoffzuschnitte an dem Stahlband befestigen zu können. Als Abdeckung der Fenster 5 finden lichtdurchlässige Kunststoffe Anwendung, wie z.b. Kunststoffe auf Cellulosebasis, wie Celluloseacetat, ferner Vinylpolymerisate, PS, PMMA und PC.

Nach einer weiteren Ausführungsform besteht die mit mindestens einem Fenster 5 versehene Matrize aus einem der Form der Matrize entsprechend gestaltetem Zuschnitt aus einem lichtdurchlässigen, glasklaren Kunststoff, z.B. auf Cellulosebasis, wie Celluloseacetat, oder wie einem Vinylpolymerisat, PS, PMMA und PC, wobei insbesondere solche Kunststoffe zur Anwendung gelangen, wie diese für optische Zwecke verwendet werden, wobei eine gewisse Elastizität gegeben sein muß, um die Matrize um einen Zahn legen zu können. Zur Ausbildung von Fenstern 5 ist die Matrize aus dem Kunststoffstreifen mit einer metallischen Beschichtung versehen, die unter Ausbildung von fensterartigen Flächen z.b. aufgedampft sein kann. Derartige metallisierte Kunststoffe werden nach nichtgalvanischen oder nach galvanischen Verfahren hergestellt. So kann die Herstellung nach dem Metallspritzverfahren erfolgen, bei dem niedrig schmelzende Metalle als Nebel auf den Kunststoff aufgebracht werden oder nach dem Metallreduktionsverfahren erfolgen, bei dem Metallsalz-Lösungen, z.B. Gold-, Silber- oder Kupfersalz-Lösungen mit Hilfe von Formaldehyd reduziert werden. Die Metalle schlagen sich dann auf dem Kunststoff nieder. Auch nach dem Vakuumbedampfungsverfahren ist eine Metallbeschichtung möglich. Als Kunststoffe werden im vorliegenden Fall solche verwendet, die mit den Zahnfüllungen weder Verbindungen eingehen noch von diesen an- oder aufgelöst werden.

Der Vorteil der Verwendung von metallbeschichteten Matrizen liegt in der vereinfachten Herstellung . Großflächige Zuschnitte aus einem geeigneten Kunststoff werden mittels Metallen beschichtet, wobei gleichzeitig eine der Anzahl der aus dem Zuschnitt dann herauszustanzenden Matrizen entsprechende Anzahl von unbeschichteten Flächenabschnitten ausgebildet werden, die dann die Fenster 5 bilden. Nach dem beschichten werden dann die Matrizen aus dem metallbeschichteten Zuschnitt gestanzt, wobei dann jede Matrize mit einer fensterartigen Fläche versehen ist, die lichtdurchlässig ist. Soll jede Matrize mehrere Fenster 5 aufweisen, so werden während des Beschichtungsvorganges pro auszustanzender Matrize eine entsprechende Anzahl von lichtdurchlässigen Flächen ausgespart. Fig. 18 zeigt eine Matrize 1 aus einem Träger 80 aus einem lichtdurchlässigen Kunststoff, der mit einer metallischen Beschichtung 81 unter Aussparung eines Fensters 5 versehen ist.

Des weiteren kann die Matrize 1 auch aus einem Glasmetall bestehen, das in Form eines dünnen Bandes oder Folie eingesetzt wird, aus dem die Matrize 1 unter Ausbildung von Fenstern 5 hergestellt wird.

Die Anzahl der in der Matrize 1 ausgebildeten Fenster 5 kann beliebig gewählt sein, wobei neben einem Fenster die Matrize 1 zwei oder auch mehr als zwei nebeneinanderliegende Fenster aufweisen kann. besonders vorteilhaft ist dabei auch eine gitterförmige Ausgestaltung des metallischen Teils der Matrize, so daß eine Vielzahl von nebeneinander und übereinander angeordneter Fenster 5 ausgebildet wird. Die Eigenstabilität der Matrize 1 wird durch diese Ausgestaltung bei gleichzeitiger Aufrechterhaltung einer ausreichenden Flexibilität verbessert.

Die Fenster 5 weisen eine quadratische, rechteckige, kreisförmige oder eine andere geometrische Form auf.

## Patentansprüche

1. Matrize für die Dentalmedizin, die als Verschalung beim Einbringen von Füllungen in Zahnkavitäten dient und die aus einem bandförmigen Zuschnitt aus einem zweischichtigen Material besteht, wobei die eine Schicht lichtundurchlässig und die andere Schicht lichtdurchlässig ist, dadurch gekennzeichnet, daß die Matrize (1) mindestens einen lichtdurchlässigen Bereich in Form einer fensterartigen Fläche oder Ausnehmung (5) in der lichtundurchlässigen Schicht aufweist.

2. Matrize nach Anspruch 1, dadurch gekennzeichnet, daß die Matrize (1) in ihrem mittleren Bereich einen Positionierungsteil (2) zur Matrizenhalterung am Zahn aufweist, das beidendseitig in schmälere Endbereiche (3) übergeht, die gegenüber dem Positionierungsteil (2) derart abgesetzt sind, daß dieses mit einem Abschnitt aus der von den oberen Rändern der beiden Endbereiche (3) gebildeten Ebene herausragt, wobei das Positionierungsteil (2) mindestens eine fensterartige Ausnehmung (5) oder eine fensterartige Fläche aufweist.

3. Matrize nach einem der Ansprüche 1 und 2, dadurch gekennzeichnet, daß das Positionierungsteil (2) mindestens im lichtdurchlässigen Bereich eine diesen Bereich umfassende, lichtdurchlässige Schicht aufweist.

4. Matrize nach einem der Ansprüche 1 bis 3, dadurch gekennzeichnet, daß die lichtdurchlässige Schicht aus Kunststoffolie, z.B. aus Celluloseacetat, besteht.

5. Matrize nach einem der Ansprüche 1 bis 4, dadurch gekennzeichnet, daß der Mittelbereich des Positionierungsteils (2) in seiner Breitenform eine der konusähnlichen Zahnform entsprechende Konusform und mindestens eine Ausbauchung aufweist.

6. Matrize nach einem der Ansprüche 1 bis 5, dadurch gekennzeichnet, daß die Matrize (1) ein Fenster (5) aufweist.

7. Matrize nach einem der Ansprüche 1 bis 5, dadurch gekennzeichnet, daß die Matrize (1) zwei nebeneinanderliegend angeordnete Fenster (5) aufweist.

8. Matrize nach einem der Ansprüche 1 bis 5, dadurch gekennzeichnet, daß unter Ausbildung eines metallischen Gitters die Matrize (1) eine Anzahl von in Reihe nebeneinander und übereinander angeordneten Fenstern (5) aufweist.

9. Matrize nach einem der Ansprüche 1 bis 8, dadurch gekennzeichnet, daß das Fenster (5) eine quadratische, rechteckige, Kreis- oder eine andere geometrische Form aufweist.

10. Matrize nach einem der Ansprüche 1 bis 9, dadurch gekennzeichnet, daß die Matrize (1) aus einem der Matrizenform entsprechenden Zuschnitt aus einem metallischen Werkstoff, wie z.B. Stahl, mit mindestens einer fensterartigen Durchbrechung (5) und einem Zuschnitt aus einem lichtdurchlässigen Werkstoff, wie Kunststoff auf Cellulosebasis, oder aus einem Vinylpolymerisat, PS, PMMA oder PC besteht, wobei beide Zuschnitte miteinander vermittels einer Kleb- oder Schweinverbindung verbunden sind.

11. Matrize nach Anspruch 10, dadurch gekennzeichnet, daß der Zuschnitt aus dem lichtdurchlässigen Werkstoff in Form und Abmessungen denen der Matrize entspricht.

12. Matrize nach Anspruch 10, dadurch gekennzeichnet, daß der Zuschnitt aus dem lichtdurchlässigen Werkstoff in Form und Abmessungen denen des Fensters (5) entspricht, wobei die Bemessung des Zuschnittes derart ist, dan dieser mit seinem umlaufenden Rand an der Wandfläche des metallischen Zuschnittes anliegt.

13. Matrize nach einem der Ansprüche 1 bis 12, dadurch gekennzeichnet, daß der aus dem lichtundurchlässigen Material bestehende, mit mindestens einem Fenster (5) versehene Zuschnitt der Matrize (1) aus einem mit dem Zahnfüllmaterial verträglichen Kunststoff, wie PVC, PA od.dgl. besteht.

14. Matrize nach einem der Ansprüche 1 bis 9, dadurch gekennzeichnet, daß die Matrize (1) aus einem der Matrizenform entsprechenden Zuschnitt als Träger (80) aus einem lichtdurchlässigen Kunststoff, z.B. Cellulosebasis, aus Vinylpolymerisat, PS, PMMA oder PC und einer auf den Träger (80) aufgedampften oder aufgebrachten Beschichtung (81) aus einem metallischen Werkstoff, wie Gold, Silber oder Kupfer, besteht, wobei bei dem Aufbringen der Beschichtung (81) mindestens eine das Fenster (5) bildende Fläche ausgespart ist.

15. Vorrichtung zur Herstellung von mehrschichtigen Matrizenbändern mit Fenstern (5), wobei mindestens eine Schicht für das Festhalten der Matrize am Zahn und mindestens eine Schicht lichtdurchlässig ausgebildet ist, vermittels einer Metallbandabnahmeeinrichtung mit einer nachgeschalteten Fensterausstanzvorrichtung (64), einer Kunststoffbandabnahmeeinrichtung, einer nachgeschalteten, die beiden Bänder unlösbar miteinander zu verbindenden Einrichtung (65) und einer das Mehrschichtband in Matrizen stanzenden Stanzvorrichtung (67).

## Claims

1. Dental matrix band which serves as a formwork for the insertion of fillings into dental cavities and which is comprised of a band-like blank of a two-layer material, in which the one layer is opaque and the other layer is transparent, characterized in that the matrix (1) is provided with at least one transparent area in the form of a window-like area or recess (5) in the opaque layer.

2. Dental matrix band according to Claim 1, characterized in that the matrix (1), within its central area, possesses a positioning portion (2) for mounting the matrix on the tooth, which, at both ends, passes into narrower terminal areas (3), which, in comparison with the positioning portion (2), are stepped in such a way that the same projects from the plane formed by the top edges of the two terminal areas (3), while the positioning portion (2) is provided with at least one window-like recess (5) or a window-like area.

3. Dental matrix band according to Claims 1 or 2, characterized in that the positioning portion (2), at least within the transparent area, is provided with a transparent layer comprising said area.

4. Dental matrix band according to any of Claims 1 through 3, characterized in that the transparent layer is comprised of a plastic film or sheet, e.g. of cellulose acetate.

5. Dental matrix band according to any of Claims 1 through 4, characterized in that the central area of the positioning portion (2), in its width, possesses a conical shape corresponding to the cone-like dental configuration and at least one bulge.

6. Dental matrix band according to any of Claims 1 through 5, characterized in that the matrix (1) is provided with one window (5).

7. Dental matrix band according to any of Claims 1 through 5, characterized in that the matrix (1) is provided with two windows (5) disposed in side-by-side arrangement.

8. Dental matrix band according to any of Claims 1 through 5, characterized in that, while forming a metallic lattice, the matrix (1) is provided with a plurality of windows (5) disposed in series in side-by-side arrangement and on above each other.

9. Dental matrix band according to any of Claims 1 through 8, characterized in that the window (5) possesses a square, rectangular, circular or some other geometric configuration.

10. Dental matrix band according to any of Claims 1 through 9, characterized in that the matrix (1) is comprised of a blank corresponding to the matrix configuration and of a metallic material, such as e.g. steel, having at least one window-like perforation (5) and of a blank of a transparent material, such as plastic having a cellulose basis, or of a vinyl polymerisate, PS, PMMA or MC, in which case both blanks are interconnected with the aid of a bonded or welded connection.

11. Dental matrix band according to Claim 10, characterized in that the blank comprised of the transparent material, in configuration and dimension, corresponds to those of the matrix.

12. Dental matrix band according to Claim 10, characterized in that the blank comprised of the transparent material, in configuration and dimensions, corresponds to those of the window (5), the dimension of the blank in this case being such that the same rests against the wall area of the metallic blank with its circumferential edge.

13. Dental matrix band according to any of Claims 1 through 12, characterized in that the blank of the matrix (1) comprised of the opaque material and provided with at least one window (5), is comprised of a plastic that is compatible with the dental filling material, such as PVC, PA or suchlike.

14. Dental matrix band according to any of Claims 1 through 9, characterized in that the matrix (1) is comprised of a blank which corresponds to the matrix configuration serving as a backing (80) of a transparent plastic, e.g. having a cellulose basis, of a vinyl polymerisate, PS, PMMA or PC and a coating (81) vapor-deposited on or applied to the backing (80) of a metallic material, such as gold, silver or copper, while, when the coating (81) is applied, an area forming the window (5) is left blank.

15. Device for the fabrication of multi-layer dental matrix bands provided with windows (5), in which at least one layer is designed for the retention of the matrix on the tooth and at least one layer is constructed so as to be transparent, with the aid of a metal band removal means with subsequently inserted window stamping-out means (64), a plastic band removal means, a subsequently inserted device (65) for undetachably interconnecting the two bands and a punch means (67) for stamping out the multi-layer band in the form of matrices.

## Revendications

1. Matrice dentaire qui sert de coffrage lors de la mise en place de matières de remplissage dans des cavités de dent et qui est composée d'une pièce découpée en forme de bande qui est constituée par un matériau en deux couches, l'une des couches étant imperméable à la lumière et l'autre couche étant perméable à la lumière, **caractérisée en ce** que la matrice (1) présente au moins une zone perméable à la lumière en forme de surface ou de creux du type fenêtre (5) dans la couche imperméable à la lumière.

2. Matrice selon la revendication, **caractérisée en ce** que la matrice (1) présente, dans sa zone centrale, une partie de positionnement (2) pour fixer la matrice à la dent, partie qui se poursuit aux deux extrémités en zones d'extrémité plus étroites (3) qui sont décalées par rapport à la partie de positionnement (2) de telle manière que celle-ci fait saillie avec une portion en dehors du plan formé par les deux bords supérieurs des deux zones d'extrémité (3), la partie de positionnement (2) présentant au moins un creux du type fenêtre (5) ou une surface du type fenêtre.

3. Matrice selon l'une des revendications 1 et 2, **caractérisée en ce** que la partie de positionnement (2) présente une couche perméable à la lumière qui entoure la zone perméable à la lumière au moins dans cette zone.

4. Matrice selon l'une des revendications 1 à 3, **caractérisée en ce** que la couche perméable à la lumière est constituée par une feuille de matière synthétique, par exemple en acétocellulose.

5. Matrice selon l'une des revendications 1 à 4, **caractérisée en ce** que la zone centrale de la partie de positionnement (2) présente, dans la forme de sa largeur, une forme de cône qui correspond à la forme de la dent semblable à celle d'un cône et qu'elle a au moins une protubérance.

6. Matrice selon l'une des revendications 1 à 5, **caractérisée en ce** que la matrice (1) présente une fenêtre (5).

7. Matrice selon l'une des revendications 1 à 5, **caractérisée en ce** que la matrice (1) présente deux fenêtres (5) placées l'une à côté de l'autre.

8. Matrice selon l'une des revendications 1 à 5, **caractérisée en ce** que la matrice (1) présente un certain nombre de fenêtres (5) placées en rangées l'une à côté de l'autre et l'une sur l'autre en formant une grille métallique.

9. Matrice selon l'une des revendications 1 à 8, **caractérisée en ce** que la fenêtre (5) présente une forme carrée, rectangulaire, circulaire ou une autre forme géométrique.

10. Matrice selon l'une des revendications 1 à 9, **caractérisée en ce** que la matrice (1) est constituée par une pièce découpée correspondant à la forme de la matrice en une matière métallique, comme par exemple l'acier, avec au moins une découpure du type fenêtre (5) et par une pièce découpée en un matériau perméable à la lumière, comme une matière synthétique à base de cellulose, ou en résine vinylique, polystyrène, polyméthacrylate de méthyle ou polycarbonate, les deux pièces découpées étant reliées l'une à l'autre au moyen d'une jonction collée ou soudée.

11. Matrice selon la revendication 10, **caractérisée en ce** que la pièce découpée en matériau perméable à la lumière correspond en forme et dimensions à celles de la matrice.

12. Matrice selon la revendication 10, **caractérisée en ce** que la pièce découpée en matériau perméable à la lumière correspond en forme et dimensions à celles de la fenêtre (5), le dimensionnement de la pièce découpée étant tel que celle-ci touche avec son bord périphérique la surface de paroi de la pièce découpée en métal.

13. Matrice selon l'une des revendications 1 à 12, **caractérisée en ce** que la pièce découpée de la matrice (1) qui est constituée par la maitère perméable à la lumière et qui est pourvue d'au moins une fenêtre (5) est constituée par une matière synthétique compatible avec le matériau de remplissage de la dent, comme le PVC, le polyamide ou équivalent.

14. Matrice selon l'une des revendications 1 à 9, **caractérisée en ce** que la matrice (1) est constituée par une pièce découpée correspondant à la forme de la matrice comme support (80) en une matière synthétique perméable à la lumière, par exemple à base de cellulose, en résine vinylique, polystyrène, polyméthacrylate de méthyle ou polycarbonate et par un revêtement (81) de matière métallique, comme l'or, l'argent ou le cuivre, métallisée sous vide ou appliquée sur le support (80), au moins une surface qui forme la fenêtre (5) étant réservée lors de l'application du revêtement (81).

15. Dispositif pour la fabrication de bandes de matrice à plusieurs couches avec des fenêtres (5), au moins une couche étant configurée pour le maintien de la matrice sur la dent et au moins une couche étant configurée en étant perméable à la lumière, au moyen d'un dispositif de prélèvement de bande métallique avec un dispositif de découpage de fenêtre (64) placé à la suite, un dispositif de prélèvement de bande de matière synthétique, un dispositif (65) placé à la suite qui relie les deux bandes de manière inamovible et un dispositif de découpage (67) qui découpe la bande à plusieurs couches en matrices.
